# FASCICULE DE BREVET EUROPEEN

(11) **EP 0 890 782 B1**
(45) Date de publication et mention de la délivrance du brevet: **29.09.2010**
(21) Numéro de dépôt: 98401551.1
(22) Date de dépôt: 24.06.1998
(51) Int. Cl.: F17C 13/02

(54) **Dispositif de surveillance du niveau de stockage d'un produit dans un réservoir**
Anordnung zur Überwachung des Lagerfüllstands eines Produktes in einem Behälter
Device for monitoring the storage level of a product in a container

(30) Priorité: 26.06.1997 FR 9708029
(43) Date de publication de la demande: 13.01.1999
(73) Titulaire: L'AIR LIQUIDE, Société Anonyme pour l'Etude et l'Exploitation des Procédés Georges Claude, 75007 Paris (FR)
(72) Inventeur: Dulphy-Vigor, Véronique, Chicago, IL 60611 (US); Ferenczi, Laurent, 75018 Paris (FR); Viard, Nicolas, 78530 Buc (FR)
(74) Mandataire: Le Moenner, Gabriel

(56) Documents cités:
- WO-A-96/29578
- FR-A- 2 554 230
- US-A- 4 782 451
- PATENT ABSTRACTS OF JAPAN vol. 012, no. 182 (M-702), 27 mai 1988 & JP 62 292998 A (YAZAKI CORP), 19 décembre 1987

## Description

L'invention concerne un dispositif de surveillance du niveau de stockage d'un produit contenu dans un réservoir. Plus particulièrement, elle se situe dans le domaine de la distribution des produits en vrac tels que des gaz industriels, de l'essence, etc... qui sont stockés dans des réservoirs ou stockages appropriés, installés sur des sites industriels chez des clients à proximité d'installations consommatrices de ces produits.

On connaît des réservoirs équipés d'un dispositif de surveillance du niveau de stockage de produit comprenant un capteur de mesure de la quantité de produit contenu dans le réservoir et un automate d'exploitation associé. L'automate scrute en continu le niveau de stockage du réservoir délivré par le capteur et, en fonction d'un seuil préfixé, transmet une commande de réapprovisionnement, par exemple via un réseau téléphonique, à un centre d'un fournisseur en charge de l'approvisionnement du réservoir. Par ailleurs, le dispositif connu est muni d'un afficheur numérique ou analogique commandé par l'automate pour que le client puisse connaître à tout moment la quantité de produit qui reste dans le réservoir.

Ce dispositif connu présente l'inconvénient que seul le niveau de stockage du produit est affiché. Par conséquent, le client ne dispose d'aucun moyen pour savoir d'une part si une commande de réapprovisionnement a été envoyée ou non, et d'autre part, dans le cas où elle a été envoyée, si cette commande a été enregistrée par le fournisseur. De ce fait, le client est dans l'incertitude et doit contrôler soi-même si le niveau de stockage est passé en dessous du seuil préfixé ce qui nécessite une intervention régulière de sa part. Une fois qu'il a constaté que le seuil a été franchi, il est contraint de contacter le fournisseur pour lui demander confirmation qu'une commande de réapprovisionnement du réservoir en question a bien été enregistrée. De plus, avant qu'il ait contacté le fournisseur, il ne connaît pas le jour de passage de celui-ci. C'est pourquoi il doit se tenir prêt pour prendre à tout moment les dispositions nécessaires pour le remplissage du réservoir en question comme par exemple l'arrêt des installations qui sont alimentées par celui-ci. Dans un souci de qualité de service de la part du fournisseur, ces obligations de contrôle côté client sont indésirables.

Le document US-A-4,782,451 décrit une méthode pour s'assurer qu'une quantité suffisante de liquide est maintenue dans un réservoir distant d'un centre de réapprovisionnement. Le niveau de liquide dans le réservoir est déterminé périodiquement et envoyé à un récepteur pour déterminer le taux d'usage du liquide. Le récepteur envoie un signal à un centre de réapprovisionnement dans le cas où des calculs mathématiques indiquent qu'un réapprovisionnement est nécessaire

Par ailleurs, dans le cas des dispositifs connus qui n'affichent que le niveau de stockage, il est par fois difficile pour le client de percevoir certains dysfonctionnements comme par exemple des valeurs de mesure incohérentes délivrées par un capteur défaillant.

La présente invention vise à pallier ces divers inconvénients en proposant un dispositif de surveillance qui permette d'informer un client utilisant un réservoir de stockage d'un produit de façon plus complète sur l'état actuel du réservoir ainsi que sur l'état de fonctionnement du dispositif, et notamment sur le fait qu'une commande de réapprovisionnement a bien été enregistrée au centre de réapprovisionnement sans que l'utilisateur doive prendre une initiative pour par exemple contacter son fournisseur.

A cet effet, l'invention a pour objet un dispositif de surveillance du niveau de stockage d'un produit contenu dans un réservoir, comprenant des moyens de mesure du niveau de stockage du produit, une unité centrale pour exploiter le niveau relevé par les moyens de mesure, des moyens de mémorisation d'au moins un seuil de niveau de stockage, des moyens de comparaison d'une valeur de niveau délivrée par l'unité centrale avec ledit seuil, des moyens de déclenchement d'une commande de réapprovisionnement, commandés par les moyens de comparaison, et des moyens de transmission de la commande de réapprovisionnement à un centre de réapprovisionnement, **caractérisé en ce qu**'il comprend en outre des moyens de réception d'au moins une information qui est émise par ledit centre de réapprovisionnement en réponse à la transmission de ladite commande de réapprovisionnement, et en ce qu'il comprend une unité d'affichage présentant une zone d'affichage de ladite information émise par le centre de réapprovisionnement.

Le dispositif selon l'invention peut de plus comporter une ou plusieurs des caractéristiques suivantes :
- le dispositif comprend des moyens de contrôle du fonctionnement de l'unité centrale, et l'unité d'affichage comporte une zone d'affichage de l'état de fonctionnement de l'unité centrale,
- le dispositif comprend des moyens de contrôle du fonctionnement des moyens de mesure du niveau de stockage du produit, et l'unité d'affichage comporte une zone d'affichage de l'état de fonctionnement des moyens de mesure,

- le dispositif comprend des moyens de contrôle du fonctionnement des moyens de transmission et de réception, et l'unité d'affichage comporte une zone d'affichage de l'état de fonctionnement des moyens de transmission et de réception,
- le dispositif comprend des moyens d'étalonnage des moyens de mesure du niveau de stockage et des moyens de contrôle du fonctionnement des moyens d'étalonnage, et l'unité d'affichage comporte une zone d'affichage de l'état de fonctionnement des moyens d'étalonnage,
- le dispositif comprend une unité d'alimentation électrique de secours, des moyens de contrôle du fonctionnement de l'alimentation électrique de secours et l'unité d'affichage comporte une zone d'affichage de l'état de fonctionnement de l'unité d'alimentation électrique,
- l'unité d'affichage comporte au moins deux zones d'affichage du niveau de stockage du produit dont l'une est du type à affichage incrémental et l'autre du type à affichage numérique,
- l'unité d'affichage comprend un afficheur à cristaux-liquides.

L'invention a également pour objet un réservoir comprenant un dispositif de surveillance du type défini ci-dessus.

D'autres caractéristiques et avantages de l'invention ressortiront de la description suivante, donnée à titre d'exemple sans caractère limitatif en regard des dessins annexés, sur lesquels :
La figure 1 est un schéma synoptique du dispositif selon l'invention installé sur un réservoir de stockage d'un gaz liquéfié, et
La figure 2 est un exemple de réalisation d'un écran d'une unité d'affichage du dispositif selon l'invention.

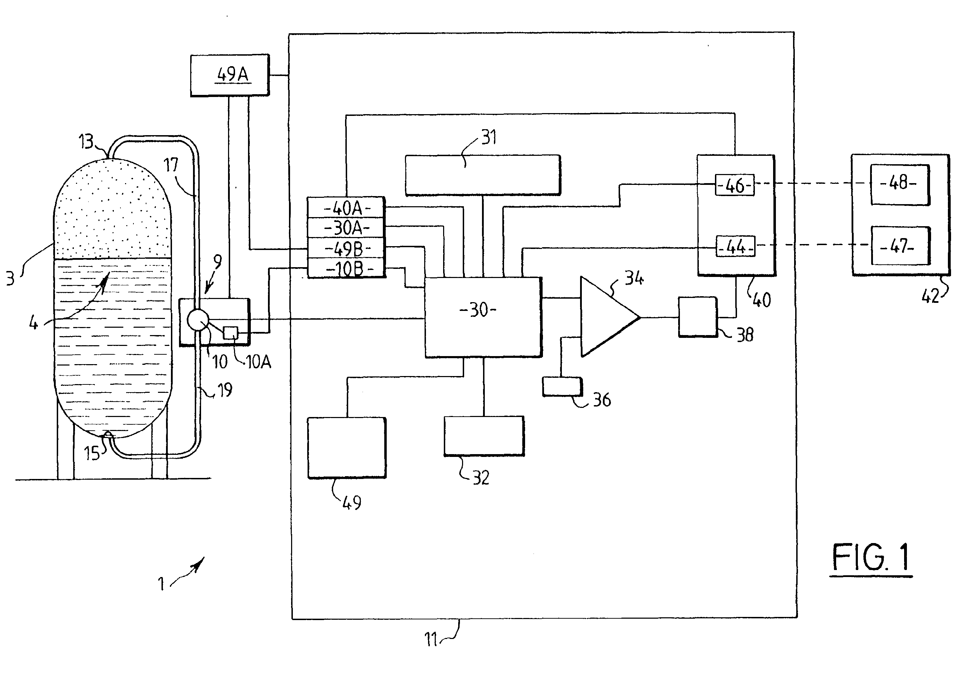

Sur la figure 1 est représenté un dispositif 1 de surveillance du niveau de stockage selon l'invention. Ce dispositif 1 est installé sur un réservoir thermiquement isolé 3 contenant un gaz liquéfié 4, tel que par exemple de l'azote liquide.

Le dispositif 1 comprend des moyens 9 de mesure du niveau de stockage du gaz liquéfié 4, et une unité 11 de traitement des signaux délivrées par les moyens 9 de mesure. Les moyens 9 comprennent un capteur 10 de mesure d'une part de la pression absolue régnant dans le réservoir 3 et d'autre part de la pression différentielle entre un point haut 13 et un point bas 15 du réservoir 3. A cet effet, le capteur 10 est relié à ces points haut 13 et bas 15 par respectivement un capillaire 17, 19. Un tel capteur nécessite un étalonnage régulier du fait des dérives dans le temps de la référence "zéro". C'est pourquoi les moyens 9 de mesure sont en outre équipés d'une unité d'étalonnage 10A du capteur 10.

L'unité 11 comprend une unité centrale 30 reliée au capteur 10 pour exploiter les signaux délivrés par celui-ci, une mémoire 31 reliée à l'unité centrale 30 et destinée à mémoriser des valeurs qui correspondent à des instants de mesure délivrés par une horloge 32, des valeurs du niveau de stockage du produit associées à ces instants de mesure ainsi que des valeurs qui correspondent aux quantités de produit consommées entre deux instants successifs de mesure. En outre, l'unité 11 de traitement comprend des moyens de comparaison 34 dont une entrée est reliée à l'unité centrale 30 et dont une autre entrée est reliée à des moyens de mémorisation 36 d'un seuil de niveau de stockage prédéfini à l'avance.

En fonction du résultat de comparaison, les moyens de comparaison 34 commandent des moyens 38 de déclenchement d'une commande de réapprovisionnement.

Les moyens 11 de traitement comportent en outre des moyens de communication 40 du dispositif 1 avec un centre 42 de réapprovisionnement qui est éloigné du réservoir 3, par exemple dans une autre ville. Ces moyens 40 de communication comprennent d'une part des moyens de transmission 44 et d'autre part des moyens de réception 46 d'informations respectivement en direction ou en provenance du centre de réapprovisionnement 42 qui coopèrent avec des unités correspondantes 47 et 48 du centre de réapprovisionnement.

Les moyens de transmission 44 sont reliés à une sortie des moyens de déclenchement 38 pour émettre, en fonction d'une commande reçue par ces moyens 38, une commande de réapprovisionnement au centre 42. En outre, les moyens 44 de transmission sont reliés à l'unité centrale 30 afin de transmettre des informations supplémentaires, calculées par cette unité 30, telles qu'une date avant laquelle une livraison de produit doit intervenir, et la quantité estimée de produit pouvant être introduite dans le réservoir 3 à la date susmentionnée, au centre 42.

Les moyens 46 de réception sont reliés à l'unité centrale 30 afin de transmettre à celle-ci des informations reçues du centre 42 notamment des informations reçues en réponse à l'enregistrement par celui-ci d'une commande de réapprovisionnement telles qu'un accusé de réception et un délai prévu de livraison.

Avantageusement, le dispositif 1 est équipé d'une alimentation électrique de secours 49A telle qu'une batterie qui, en cas de panne d'électricité, permet d'assurer la continuité de fonctionnement du dispositif 1 en fournissant l'énergie électrique nécessaire aux moyens de mesure 9 et à l'unité de traitement 11.

Pour informer un utilisateur sur l'état du réservoir 3 et sur l'état de fonctionnement du dispositif 1, l'unité de traitement 11 comprend d'une part divers moyens de contrôle de l'état de fonctionnement des unités et moyens du dispositif 1 et d'autre part une unité d'affichage 49 d'informations particulières, notamment d'informations reçues du centre 42 et d'informations relevées par ces moyens de contrôle et par les moyens de mesure 9. Cette unité d'affichage 49 est commandée par une partie de l'unité centrale 30.

En ce qui concerne les moyens de contrôle, le dispositif 1 comprend plus particulièrement des moyens 30A de contrôle de l'état de fonctionnement de l'unité centrale 30, des moyens 40A de contrôle de l'état de fonctionnement des moyens de communication 40, des moyens 49B de contrôle de l'état de fonctionnement de l'alimentation électrique de secours 49A, des moyens 10B de contrôle de l'état de fonctionnement de l'unité d'étalonnage 10A. En vérifiant la validité des signaux délivrés par le capteur 10, l'unité centrale constitue en plus un moyen de contrôle de l'état de fonctionnement du capteur 10. En vue de l'affichage par l'unité d'affichage 49 des informations relevées, les moyens de contrôle 10B, 30A, 40A et 49B sont reliés chacun à l'unité centrale 30.

L'unité 49 est de préférence un afficheur à cristaux liquides équipé d'un écran à éclairage par l'arrière qui s'adapte automatiquement à la luminosité de l'environnement dans lequel se trouve l'écran. Un afficheur à cristaux liquides présente l'avantage qu'il peut fonctionner dans une large gamme de températures et même sous des conditions météorologiques difficiles.

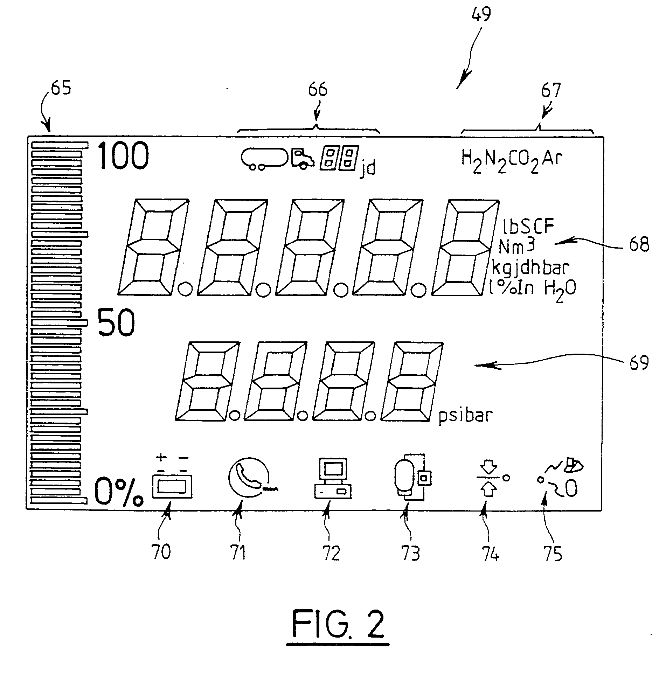

La figure 2 montre un exemple de réalisation de la présentation d'écran d'une telle unité 49 d'affichage.

L'écran de l'unité d'affichage 49 est subdivisé en différentes zones 65 à 75 affichant chacune, en fonction des commandes reçues de l'unité centrale 30, une seule information. Par le fait que des informations identiques s'affichent sur cet écran toujours au même emplacement, le client peut identifier rapidement l'état du réservoir 3 et l'état de fonctionnement du dispositif 1 lui-même.

Par la suite, on va décrire en détail les différentes zones d'affichage de l'unité 49 ainsi que les informations qui y sont affichées.

Dans la partie gauche de l'écran est située une zone 65 d'affichage du niveau de stockage de produit contenu dans le réservoir 3. Cette zone 65 d'affichage de niveau est réalisé sous la forme d'un affichage incrémental en pour-cent allant de 0 à 100% de taux de remplissage du réservoir 3 et s'étendant sur toute la hauteur de l'écran. Cette zone 65 est constamment en fonctionnement et la valeur affichée est rafraîchie après chaque mesure du niveau de stockage.

Dans la partie centrale supérieure de l'écran est disposée une zone 68 d'affichage numérique soit du niveau de stockage de produit en une unité définie à l'avance telle que Ib, SCF, Nm³, kg ...., soit de l'autonomie du réservoir 3. Par l'autonomie du réservoir 3, on entend la durée estimée en heures ou en jours jusqu'à l'épuisement du stock de produit. Cette durée est calculée par l'unité centrale 30 sur la base des consommations enregistrées dans la mémoire 31.

Dans la partie centrale inférieure de l'écran de l'unité 49, est prévue une zone 69 d'affichage de la pression absolue régnant dans le réservoir 3, ceci dans une unité prédéfinie à l'avance.

Au dessus de la zone 68, sur la partie droite de l'écran, est prévue une zone 67 d'affichage permanent du type de produit, par exemple H₂,N₂, CO₂ ou Ar, stocké dans le réservoir 3.

Au dessus de la zone 68 et entre les zones 65 et 67 est située une zone 66 d'affichage d'un message signalant la réception d'un accusée de réception. Cet affichage comporte deux parties, une première montrant un dessin d'un camion de réapprovisionnement et une seconde pour afficher un délai de livraison en jours. En effet, après avoir reçu la commande de réapprovisionnement envoyée par le dispositif 1, le centre de réapprovisionnement 42 envoie au dispositif un accusée de réception pour signaler l'enregistrement de cette commande, et un délai estimé ou réel de livraison. Ainsi, le client est en mesure de prendre toutes les dispositions nécessaires pour la livraison, par exemple un arrêt des installations alimentées par le réservoir.

En dessous de la zone 69, à droite de la zone 65 sont disposées l'une à côté de l'autre, des zones 70 à 75 d'affichage d'informations relevées par les moyens de contrôle 10B,30,30A,40A et 49B.

La zone 70 affiche le dessin d'une batterie quand le dispositif a détecté une panne d'électricité et fonctionne à l'aide de l'électricité délivrée par la batterie 49A. On prévoit en outre que le dessin de la batterie de la zone 70 clignote si les moyens de contrôle 49B ont détecté que l'énergie électrique emmagasinée dans la batterie 49A est à peu près épuisée.

Dans la zone 71 est représenté un dessin montrant, entouré par un cercle, un combiné de téléphone. Ce dessin est affiché par l'écran quand les moyens de communication 40 transfèrent ou reçoivent des informations respectivement vers ou du centre 42 de réapprovisionnement. Par ailleurs, on prévoit en outre un affichage de ce dessin en mode de clignotement lent et un autre en mode de clignotement rapide. Le mode de clignotement lent est déclenché quand les moyens de transmission 44 ont reçu de la part des moyens 38 une commande pour transmettre une commande de réapprovisionnement au centre 42, mais ne peuvent pas établir une liaison de communication avec celui-ci. Le mode de clignotement rapide est déclenché quand les moyens de contrôle 40A des moyens de communication 40 ont détecté une défaillance des moyens de communication 40.

Dans la zone 72 est représenté un dessin montrant un ordinateur. Ce dessin est affiché en permanence si les moyens 30A ont relevé le bon fonctionnement de l'unité centrale 30. Quand l'unité 30 est en train d'être initialisée, par exemple suite à une commande reçue du centre 42, ce dessin clignote lentement. Dans le cas où les moyens de contrôle 30A ont décelé qu'une erreur est survenue dans le fonctionnement de l'unité 30, le dessin clignote rapidement.

Dans la zone 73 est représenté un dessin symbolisant le réservoir 3 équipé du capteur 10 de mesure. Si l'écran affiche ce dessin en permanence, l'unité centrale 30 qui contrôle les signaux délivrés par le capteur 10 d'un point de vue validité, a relevé que celui-ci fonctionne normalement. Si le capteur délivre des signaux incohérents et donc non-valides, ce dessin est affiché dans un mode de clignotement lent. Par contre, si le capteur délivre plus de signaux du tout, ce dessin est affiché dans un mode de clignotement rapide montrant au client que le capteur est défaillant.

Dans la zone d'affichage 74 est représenté un dessin montrant deux flèches opposées, dirigées en direction d'un trait marquant une référence "zéro". Ce dessin est affiché en permanence, lors d'un étalonnage de la référence "zéro" du capteur 10 par l'unité 10A. Si un tel étalonnage doit être refait, ce dessin est affiché dans un mode clignotant lentement. Si l'unité d'étalonnage 10A est défaillante, ce dessin est affiché dans un mode clignotant rapidement.

Par ailleurs, on prévoit de relier le dispositif selon l'invention à d'autre terminaux de surveillance. A cet effet, quand le dispositif transmet des informations en direction d'un tel terminal supplémentaire, le dessin de la zone 75 montrant un point relié d'une part à un terminal et d'autre part à un réservoir, s'affiche.

Pour l'émission d'une commande de réapprovisionnement, le dispositif 1 fonctionne de la manière suivante :

L'unité centrale 30 relève à des instants déterminés par l'horloge 32 le niveau de stockage délivré par le capteur 10 et enregistre ce niveau, l'instant de mesure correspondant et la consommation entre deux instants de mesure dans la mémoire 31. A partir de la mesure et/ou à partir des valeurs des consommations enregistrées dans la mémoire 31, l'unité centrale délivre une valeur de niveau de stockage au moyens de comparaison 34. Cette valeur peut être le niveau qui vient d'être mesuré mais aussi une estimation du niveau de stockage à un instant futur. Les moyens 34 comparent cette valeur au seuil enregistré dans les moyens 36 de mémorisation et, si la valeur est inférieure au seuil, envoient une commande aux moyens 38 pour que ceux-ci déclenchent l'envoi d'une commande de réapprovisionnement au centre 42 par les moyens de transmission 44. Le centre 42 envoie immédiatement ou après un certain délai pendant lequel il planifie les tournées de ses véhicules de réapprovisionnement, un accusé de réception et un délai estimé ou réel de livraison. Ces informations sont alors reçues par les moyens 46 et transmises vers l'unité centrale 30 pour être affichées sur l'écran de l'unité d'affichage 49.

Avantageusement, l'unité 11 de traitement des signaux délivrés par le capteur 10 est réalisée sous la forme d'un ordinateur chargé d'un programme adapté et équipé d'une carte de conversion analogique-numérique des signaux du capteur 10 et d'un modem pour la transmission et la réception, par exemple via un réseau téléphonique, d'informations respectivement en direction ou en provenance du centre de réapprovisionnement 42.

## Revendications

1. Dispositif (1) de surveillance du niveau de stockage d'un produit (4) contenu dans un réservoir (3), comprenant des moyens de mesure (9) du niveau de stockage du produit, une unité centrale (30) pour exploiter le niveau relevé par les moyens de mesure (9), des moyens de mémorisation (36) d'au moins un seuil de niveau de stockage, des moyens de comparaison (34) d'une valeur de niveau délivrée par l'unité centrale (30) avec ledit seuil, des moyens de déclenchement (38) d'une commande de réapprovisionnement, commandés par les moyens de comparaison (34), et des moyens de transmission (44) de la commande de réapprovisionnement à un centre (42) de réapprovisionnement, **caractérisé en ce qu'**il comprend en outre des moyens de réception (46) d'au moins une information qui est émise par ledit centre (42) de réapprovisionnement en réponse à la transmission de ladite commande de réapprovisionnement, et **en ce qu'**il comprend une unité d'affichage (49) présentant une zone d'affichage (66) de ladite information émise par le centre (42) de réapprovisionnement.

2. Dispositif selon la revendication 1, **caractérisé en ce qu'**il comprend des moyens (30A) de contrôle du fonctionnement de l'unité centrale (30), et **en ce que** l'unité d'affichage (49) comporte une zone d'affichage (72) de l'état de fonctionnement de l'unité centrale (30).

3. Dispositif selon l'une quelconque des revendications 1 à 2, **caractérisé en ce qu'**il comprend des moyens (30) de contrôle du fonctionnement des moyens de mesure (9) du niveau de stockage du produit, et **en ce que** l'unité d'affichage (49) comporte une zone d'affichage (73) de l'état de fonctionnement des moyens de mesure (9).

4. Dispositif selon l'une quelconque des revendications 1 à 3, **caractérisé en ce qu'**il comprend des moyens (40A) de contrôle du fonctionnement des moyens (44, 46) de transmission et de réception, et **en ce que** l'unité d'affichage (49) comporte une zone d'affichage (71) de l'état de fonctionnement des moyens (40) de transmission et de réception.

5. Dispositif selon l'une quelconque des revendications 1 à 4, **caractérisé en ce qu'**il comprend des moyens d'étalonnage (10A) des moyens de mesure (9) du niveau de stockage et des moyens (10B) de contrôle du fonctionnement des moyens d'étalonnage (10A), et **en ce que** l'unité d'affichage (49) comporte une zone d'affichage (74) de l'état de fonctionnement des moyens d'étalonnage (10A).

6. Dispositif selon l'une des revendications 1 à 5, **caractérisé en ce qu'**il comprend une unité d'alimentation électrique de secours (49A) des moyens (49B) de contrôle du fonctionnement de l'alimentation électrique de secours (49A), et **en ce que** l'unité d'affichage (49) comporte une zone d'affichage (70) de l'état de fonctionnement de l'unité d'alimentation électrique (49A).

7. Dispositif selon l'une des revendications 1 à 6, **caractérisé en ce que** l'unité d'affichage (49) comporte au moins deux zones d'affichage (65,68) du niveau de stockage du produit (4) dont l'une est du type à affichage incrémental (65) et l'autre du type à affichage numérique (68).

8. Réservoir de stockage d'un produit (4) **caractérisé en ce qu'**il comprend un dispositif (1) de surveillance du niveau de stockage du produit (4) selon l'une quelconque des revendications 1 à 7.

9. Réservoir selon la revendication 8, contenant du gaz liquéfié.

## Claims

1. Device (1) for monitoring the storage level of a product (4) contained in a tank (3), comprising means (9) for measuring the storage level of the product, a central processing unit (30) for utilizing the level read off by the measurement means (9), memory means (36) for holding at least one storage level threshold, means (34) for comparing a level value output by the central processing unit (30) with the said threshold, means (38) for triggering a restocking command and controlled by the comparison means (34), and means (44) for transmitting the restocking command to a restocking centre (42), **characterized in that** it furthermore comprises means (46) for receiving at least one item of information which is issued by the said restocking centre (42) in response to the transmission of the said restocking command, and **in that** it comprises a display unit (49) which exhibits an area (66) for displaying the said item of information issued by the restocking centre (42).

2. Device according to Claim 1, **characterized in that** it comprises means (30A) for checking the operation of the central processing unit (30), and **in that** the display unit (49) comprises an area (72) for displaying the state of operation of the central processing unit (30).

3. Device according to either of Claims 1 and 2, **characterized in that** it comprises means (30) for checking the operation of the means (9) for measuring the storage level of the product, and **in that** the display unit (49) comprises an area (73) for displaying the state of operation of the measurement means (9).

4. Device according to any one of Claims 1 to 3, **characterized in that** it comprises means (40A) for checking the operation of the transmission and reception means (44, 46), and **in that** the display unit (49) comprises an area (71) for displaying the state of operation of the transmission and reception means (40).

5. Device according to any one of Claims 1 to 4, **characterized in that** it comprises means (10A) for calibrating the means (9) for measuring the storage level and means (10B) for checking the operation of the calibration means (10A), and **in that** the display unit (49) comprises an area (74) for displaying the state of operation of the calibration means (10A).

6. Device according to one of Claims 1 to 5, **characterized in that** it comprises a back-up electrical power supply unit (49A) and means (49B) for checking the operation of the back-up electrical power supply (49A), and **in that** the display unit (49) comprises an area (70) for displaying the state of operation of the electrical power supply unit (49A).

7. Device according to one of Claims 1 to 6, **characterized in that** the display unit (49) comprises at least two areas (65, 68) for displaying the storage level of the product (4), one of which is of the type with incremental display (65) and the other of the type with digital display (68).

8. Storage tank for a product (4) **characterized in that** it comprises a device (1) for monitoring the storage level of the product (4) according to any one of Claims 1 to 7.

9. Tank according to Claim 8, containing liquefied gas.

## Patentansprüche

1. Vorrichtung (1) zum Überwachen des Füllpegels eines Produkts (4), das in einem Behälter (3) enthalten ist, mit Mitteln (9) zum Messen des Füllpegels des Produkts, einer Zentraleinheit (30), um den durch die Messmittel (9) gemessenen Pegel auszuwerten, Speichermitteln (36) für wenigstens einen Füllpegel-Schwellenwert, Mitteln (34) zum Vergleichen eines von der Zentraleinheit (30) gelieferten Pegelwertes mit dem Schwellenwert, Mitteln (38) zum Ausgeben eines Nachfüllbefehls, die durch die Vergleichsmittel (34) gesteuert werden, und Mitteln (44) zum Senden des Nachfüllbefehls zu einer Nachfüllzentrale (42), **dadurch gekennzeichnet, dass** sie außerdem Mittel (46) zum Empfangen wenigstens einer Information enthält, die von der Nachfüllzentrale (42) als Antwort auf das Senden des Nachfüllbefehls gesendet wird, und dass sie eine Anzeigeeinheit (49) enthält, die eine zone (66) für die Anzeige der von der Nachfüllzentrale (42) gesendeten Information aufweist.

2. Vorrichtung nach Anspruch 1, **dadurch gekennzeichnet, dass** sie Mittel (30A) für die Steuerung des Betriebs der Zentraleinheit (30) enthält und dass die Anzeigeeinheit (49) eine Zone (72) für die Anzeige des Betriebszustands der Zentraleinheit (30) enthält.

3. Vorrichtung nach einem der Ansprüche 1 bis 2, **dadurch gekennzeichnet, dass** sie Mittel (30) zum
Steuern des Betriebs der Mittel (9) zum Messen des Füllpegels des Produkts enthält und dass die Anzeigeeinheit (49) eine Zone (73) für die Anzeige des Betriebszustands der Messmittel (9) enthält.

4. Vorrichtung nach einem der Ansprüche 1 bis 3, **dadurch gekennzeichnet, dass** sie Mittel (40A) für die Steuerung des Betriebs der Sende- und Empfangsmittel (44, 46) enthält und dass die Anzeigeeinheit (49) eine Zone (71) für die Anzeige des Betriebszustands der Sende- und Empfangsmittel (40) enthält.

5. Vorrichtung nach einem der Ansprüche 1 bis 4, **dadurch gekennzeichnet, dass** sie Mittel (10A) zum Kalibrieren der Mittel (9) zum Messen des Füllpegels und Mittel (10B) zum Steuern des Betriebs der Kalibrierungsmittel (10A) enthält und dass die Anzeigeeinheit (49) eine Zone (74) für die Anzeige des Betriebszustands der Kalibrierungsmittel (10A) enthält.

6. Vorrichtung nach einem der Ansprüche 1 bis 5, **dadurch gekennzeichnet, dass** sie eine Hilfsstromversorgungseinheit (49A) und Mittel (49B) zum Steuern des Betriebs der Hilfsstromversorgung (49A) enthält und dass die Anzeigeeinheit (49) eine Zone (70) für die Anzeige des Betriebszustands der Stromversorgungseinheit (49A) enthält.

7. Vorrichtung nach einem der Ansprüche 1 bis 6, **dadurch gekennzeichnet, dass** die Anzeigeeinheit (49) wenigstens zwei Zonen (65, 68) für die Anzeige des Füllpegels des Produkts (4) enthält, wovon eine vom Typ mit inkrementeller Anzeige (65) ist und die andere vom Typ mit digitaler Anzeige (68) ist.

8. Vorratsbehälter zum Speichern eines Produkts (4), **dadurch gekennzeichnet, dass** er eine Vorrichtung (1) zum Überwachen des Füllpegels des Produkts (4) nach einem der Ansprüche 1 bis 7 enthält.

9. Vorrichtungsbehälter nach Anspruch 8, der Flüssiggas enthält.
